# NOUVEAU FASCICULE DE BREVET EUROPEEN

(11) **EP 0 333 549 B2**
(45) Date de publication et mention de la décision concernant l'opposition: **29.06.1994**
(45) Mention de la délivrance du brevet: 30.10.1991
(21) Numéro de dépôt: 89400595.8
(22) Date de dépôt: 03.03.1989
(51) Int. Cl.: B60K 15/04

(54) **Dispositif de mise à l'air libre et de sécurité contre le remplissage excessif pour réservoir**
Vorrichtung für die Entlüftung und zum Vermeiden des Ueberfüllens eines Tanks
Venting assembly avoiding overfill for a tank

(30) Priorité: 08.03.1988 FR 8802951
(43) Date de publication de la demande: 20.09.1989
(73) Titulaire: PAUL JOURNEE S.A., F-92707 Colombes Cédex (FR)
(72) Inventeur: Percebois, Serge, F-60240 Chaumont-en-Vexin (FR); Romanek, Christian, F-60430 Noailles (FR)
(74) Mandataire: Lemaire, Marc

(56) Documents cités:
- WO-A-86/02888
- DE-A- 2 743 490
- DE-A- 3 205 782
- FR-A- 2 581 597
- FR-A- 2 593 752
- GB-A- 2 107 659
- US-A- 2 637 513
- US-A- 4 625 777

## Description

L'invention concerne un dispositif de mise à l'air libre et de sécurité contre le remplissage excessif pour réservoir de véhicule automobile du type comprenant un moyen d'obturation, par exemple un bouchon, coopérant avec une embase du réservoir de manière à assurer la mise à l'air libre du réservoir lorsque le bouchon est monté sur l'embase et à limiter ou interdire cette mise à l'air libre lorsque le bouchon est démonté, afin de laisser subsister un volume gazeux dans le réservoir lors de son remplissage.

Un tel ensemble est utilisé dans les véhicules automobiles pour éviter le remplissage excessif du réservoir et le refoulement du carburant à l'extérieur du réservoir en cas d'expansion dudit carburant.

On a proposé dans le brevet FR-A-2 581 597 de prévoir une tubulure de mise à l'air libre qui est obturée par un clapet actionné par le pistolet de remplissage, ce clapet libérant cette tubulure en position de repos.

Dans le brevet FR-A-2 588 918, cette même action est obtenue par une valve d'obturation normalement ouverte et actionnée en position de fermeture par l'introduction du pistolet de remplissage, par exemple par l'intermédiaire d'un volet basculant.

Ces dispositifs connus sont compliqués, donc onéreux, et mécaniquement fragi les car soumis à l'introduction en force du pistolet de remplissage.

En outre, ils présentent l'inconvénient de n'assurer la fermeture de la mise à l'air libre qu'après introduction du pistolet.

Le brevet DE-A-2743490 montre un circuit de mise à l'air libre pour réservoir comprenant une tubulure de remplissage fermée par un moyen d'obturation alors que la trappe est en position ouverte en fermant le débouché d'une tubulure de mise à l'air libre dans la tubulure de remplissage.

Cette disposition ne permet pas la mise à l'air libre du réservoir, d'où un risque de détérioration de celui-ci lors d'une variation du volume d'air intérieur.

Dans le brevet US-A-4,625,777, conforme au préambule de la revendication 1, le circuit de mise à l'air libre comprend une tubulure de ventilation du réservoir reliée à la tubulure de remplissage, une tubulure de mise à l'air libre du réservoir reliée à la tubulure de remplissage par un clapet apte à être commandé par le moyen d'obturation de la tubulure de remplissage de manière à assurer la mise à l'air libre du réservoir lorsque ledit moyen d'obturation est monté sur l'embase de la tubulure de remplissage et à interdire cette mise à l'air libre lorsque ledit moyen d'obturation est démonté.

En outre, il est prévu un clapet de sécurité débouchant vers une tubulure d'évacuation pour, notamment, assurer la circulation des gaz vers l'extérieur, ledit clapet de sécurité comprenant un moyen d'obturation apte à obturer la tubulure d'évacuation pour interdire toute communication avec l'extérieur dès que le véhicule est incliné au-delà d'une limite prévue.

Ce clapet n'est pas conformé pour, lorsque le véhicule est en position normale, interdire la circulation de carburant vers l'extérieur, notamment lors de l'opération de remplissage du réservoir.

Le clapet associé à la tubulure de mise à l'air libre est situé au débouché de la tubulure de mise à l'air libre dans la tubulure de remplissage en comprenant un organe de fermeture de la tubulure de mise à l'air libre montée dans la tubulure de remplissage.

Dans ce document, l'organe de fermeture est solidaire d'une tige apte à être commandée directement par le moyen d'obturation de la tubulure de remplissage, la tubulure de ventilation débouche dans la tubulure de remplissage, et un ensemble monobloc, rapporté à étanchéité à la faveur d'une ouverture de la tubulure de remplissage, est prévu ; ledit ensemble comportant le clapet associé à la tubulure de mise à l'air libre et ledit clapet de sécurité.

En pratique, l'organe de fermeture et ladite tige sont montés à l'intérieur de la tubulure de remplissage, parallèlement à celle-ci, en sorte que le clapet est mécaniquement fragile et est arrosé par le carburant.

Pour cette raison on a prévu, à l'intérieur de la tubulure de remplissage, une pièce supplémentaire de protection pour ledit clapet.

La présente invention vise à fournir un dispositif ne présentant pas les inconvénients précédents et présentant, de plus, une sécurité encore accrue contre le refoulement.

A cet effet, un dispositif de mise à l'air libre du type décrit dans le susmentionné document US-A-4,625,777, est caractérisé en ce que la tubulure de ventilation débouche dans le clapet de sécurité, en ce que le clapet de sécurité comporte un flotteur, apte à être entraîné par une arrivée de carburant, pour commander le moyen d'obturation de la tubulure d'évacuation et interdire la circulation de carburant vers l'extérieur, en ce que l'organe de fermeture de la tubulure de mise à l'air libre est disposé à l'extérieur de la tubulure de remplissage, et en ce que, lorsque le moyen d'obturation de la tubulure de remplissage ferme celle-ci, le circuit pour la mise à l'air libre comporte, en série, la tubulure de mise à l'air libre, le clapet associé à la tubulure de mise à l'air libre, une portion de la tubulure de remplissage, une portion de la tubulure de ventilation reliée directement au clapet de sécurité débouchant vers la tubulure d'évacuation.

Ainsi, comme dans le document US-A-4,625,777, la tubulure de ventilation comporte un clapet de sécurité, d'une part, assurant la circulation des gaz vers l'extérieur et, d'une seconde part, fermant toute communication avec l'extérieur dès que le véhicule est incliné au-delà d'une limite prévue.

Un tel clapet est de plus tel que, d'une troisième part, il interdit la circulation de liquide, ici le carburant contenu dans le réservoir, vers l'extérieur.

Le circuit de mise à l'air libre, suivant l'invention, assurant la mise à l'air libre par l'intermédiaire d'une portion de la tubulure de ventilation, l'évacuation vers l'extérieur se fait au travers dudit clapet de sécurité évitant tout risque de fuite du carburant.

On appréciera que le clapet associé à la tubulure de mise à l'air libre est d'un fonctionnement extrêmement sûr, et que le dispositif de mise à l'air libre est mécaniquement peu fragile et simple.

L'invention sera bien comprise à la lecture de la description suivante faite en référence aux dessins annexés dans lesquels :
- la figure 1 est une vue schématique du circuit selon l'invention ;
- la figure 2 est une vue schématique en coupe axiale d'un dispositif selon un exemple de réalisation du clapet;
- la figure 3 est une vue en coupe d'une portion d'un bouchon commandant le dispositif de la figure 1 ;
- la figure 4 est analogue à la figure 2, pour une première variante ;
- la figure 5 est analogue aux figures 2 et 4 pour une deuxième variante ;
- la figure 6 est une vue en plan d'une portion d'un bouchon commandant le dispositif de la figure 5 ;
- la figure 7 est analogue aux figures 2, 4 et 5 pour une troisième variante ; et
- la figure 8 est une vue debout du dispositif de la figure 7.

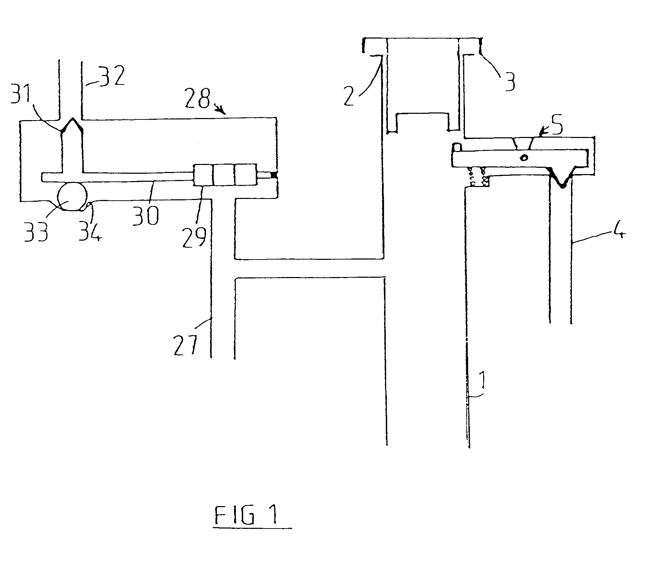

Sur la figure 1 on a représenté, de manière schématique, le circuit selon l'invention.

On voit en 1 la tubulure de remplissage du réservoir, non représenté, d'un véhicule automobile, cette tubulure étant terminée par une embase 2 sur laquelle vient se fixer un moyen d'obturation 3, dit moyen d'obturation 3 de la tubulure de remplissage 1.

De part et d'autre de cette tubulure de remplissage 1 se trouvent la tubulure de ventilation 27 du réservoir et la tubulure de mise à l'air libre 4 du réservoir.

La tubulure de ventilation 27 est reliée, d'une part au réservoir et, d'autre part, directement à un clapet 28 de sécurité. Cette tubulure 27 débouche donc dans le clapet de sécurité 28.

Ce clapet de sécurité 28 comporte un flotteur 29, situé face au débouché de la tubulure 27, qui commande, par l'intermédiaire d'un levier 30, un pointeau 31 de fermeture de la tubulure d'évacuation 32.

Le pointeau 31, formant moyen d'obturation de la tubulure d'évacuation 32, peut être également commandé par une bille 33 pouvant se déplacer sur un siège conique 34.

Le clapet 28 assure ainsi la fermeture de la tubulure d'évacuation 32, d'une part lorsque le flotteur 29 est entraîné par une arrivée de liquide, ici de carburant, et, d'autre part, lorsque l'inclinaison du véhicule est telle que la bille 33 se déplace sur le siège conique 34.

La tubulure de ventilation 27 (figure 1) est reliée à la tubulure de remplissage 1.

La tubulure de mise à l'air libre 4 débouche dans la tubulure de remplissage à travers un clapet 5 et est reliée, à son autre extrémité, au réservoir.

Comme on peut le voir sur la figure 1, lorsque la tubulure de remplissage 1 est fermée par son moyen d'obturation 3, ici un bouchon, le circuit de mise à l'air libre comprend, suivant une caractéristique de l'invention, la tubulure 4, le clapet 5, une portion de la tubulure de remplissage 1, une portion de la tubulure de ventilation 27 avec son clapet de sécurité 28.

On est assuré ainsi de ne pas risquer de sortie de liquide du réservoir quelle que soit la position du véhicule.

Le clapet 5 assure une seconde sécurité : celle de ne pas risquer de remplissage excessif.

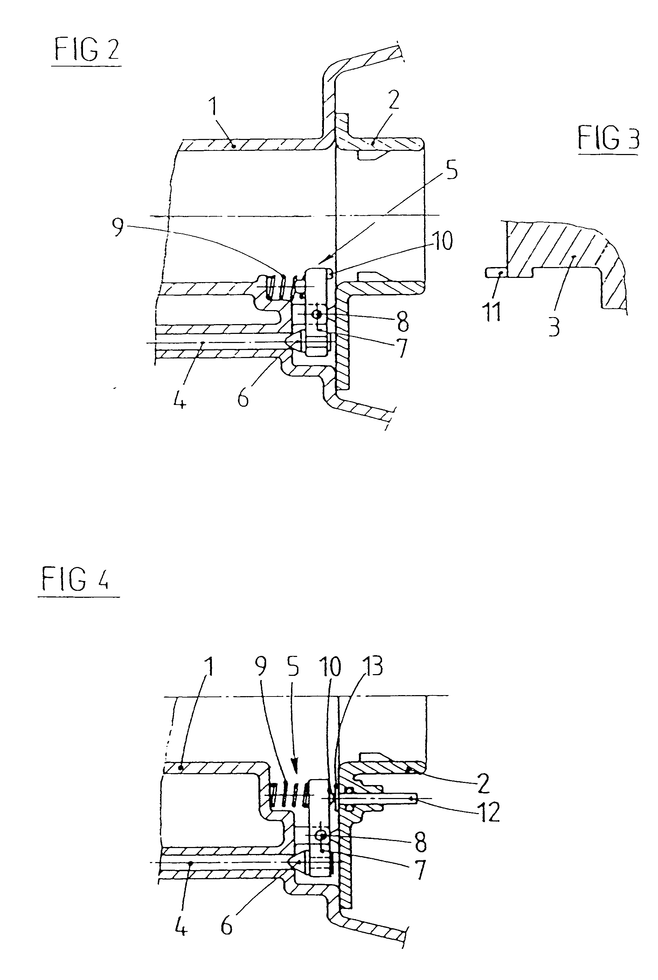

Ledit clapet est, comme le montrera la description des figures 2 à 8, tel qu'il ferme la tubulure 4 lorsque la tubulure 1 est ouverte, et qu'il ouvre la tubulure 4 lorsque le bouchon ferme la tubulure 1.

Dans la forme de réalisation des figures 2 et 3, le clapet 5 est constitué par un pointeau 6, muni d'un élément souple tel qu'une membrane non représentée, formant organe de fermeture de la tubulure 4, placé à une extrémité d'un levier 7 articulé dans sa partie médiane sur un axe 8 orthogonal à l'axe de la tubulure 1.

Le pointeau 6 est rappelé en position de fermeture de la tubulure 4 par un ressort.

Ce ressort peut, tel que représenté, être un ressort de compression 9 agissant à l'autre extrémité du levier 7 mais peut, en variante, agir sur le levier en face du pointeau 6.

Le levier 7 porte, sensiblement en regard du ressort 9, un appendice 10 en saillie à l'intérieur de la tubulure 1 et qui coopère avec un moyen de rampe 11 (figure 3) ménagé sur le bouchon 3.

Au cours du serrage du bouchon 3, le moyen de rampe 11 fait basculer progressivement le levier 3, contre l'action du ressort 9, et le pointeau 6 ouvre l'entrée de la tubulure 4 de mise à l'air libre.

Dans la variante de la figure 4, l'appendice 10 est à l'extérieurde la tubulure 1 etestactionné parun piston 12 coulissant dans un alésage de l'embase 2 et muni d'une tête d'arrêt 13.

Le piston 12 est lui-même actionné par un moyen de rampe 11 du bouchon 3.

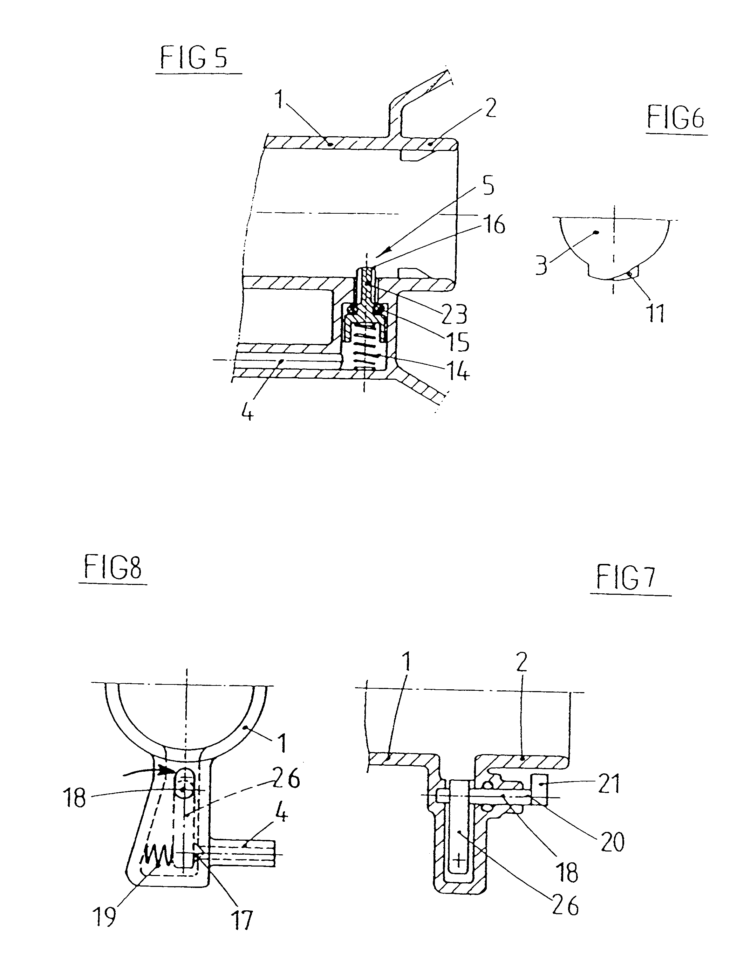

Dans une forme d'exécution des figures 5 et 6, l'organe de fermeture du clapet 5 est constitué par un coulisseau 23 se déplaçant radialement par rapport à la tubulure 1 et rappelé vers la tubulure 1 par un ressort 14 en comprimant un joint d'étanchéité 15 de manière à fermer l'entrée de la tubulure 4 de mise à l'air libre du réservoir.

Le coulisseau 23 comporte une extrémité biseautée 16 en saillie dans la tubulure 1 et qui coopère avec les moyens de rampe 11 prévus sur le bouchon 3 dont la rotation de serrage provoque le déplacement du coulisseau 13 contre l'action du ressort 14 et l'ouverture de la tubulure 4 de mise à l'air libre par écrasement du joint 15.

Les moyens de rampe 11 peuvent bien entendu être de toutes formes, telles qu'un cône, un ergot, un méplat, un plan incliné, etc.

Dans la forme de réalisation des figures 7 et 8 le clapet 5 est constitué par un levier 26 dont une extrémité porte un pointeau 17 de fermeture de la tubulure 4 et l'autre extrémité est solidaire d'un axe 18 tourillonnant dans un alésage parallèle à la tubulure 1.

Un ressort hélicoïdal 19 rappelle le pointeau 17 en position de fermeture.

L'extrémité 20 de l'axe 18 opposée au levier 16 fait saillie à l'extérieur de l'embase et porte une came 21 qui coopère avec les moyens de rampe du bouchon (non représentés) pour produire l'écartement du pointeau 17 contre l'action du ressort 19.

La tubulure 4 est, comme représentée, toujours extérieure à la tubulure de remplissage 1 ; elle peut soit lui être parallèle, soit former un angle avec elle.

Dans toutes les figures le clapet 5 associé à la tubulure 4 de mise à l'air libre comprend un organe de fermeture 6,17,23 de la tubulure 4 de mise à l'air libre disposé à l'extérieur de la tubulure de remplissage 1.

## Revendications

1. Circuit de mise à l'air libre pour réservoir de véhicule automobile du type comprenant une tubulure de remplissage (1) du réservoir avec une embase (2) apte à être fermée par un moyen d'obturation (3) de la tubulure de remplissage (1), une tubulure de ventilation (27) du réservoir reliée à la tubulure de remplissage (1), une tubulure (4) de mise à l'air libre du réservoir reliée à la tubulure de remplissage (1) par un clapet (5) apte à être commandé par le moyen d'obturation (3) de la tubulure de remplissage (1), de manière à assurer la mise à l'air libre du résevoir lorsque ledit moyen d'obturation (3) est monté sur l'embase (2) et à interdire cette mise à l'air libre lorsque ledit moyen d'oburation (3) est démonté, un clapet de sécurité (28) débouchant vers une tubulure d'évacuation (32) pour, notamment, assurer la circulation des gaz vers l'extérieur, ledit clapet de sécurité (28) comprenant un moyen d'obturation (31) apte à obturer la tubulure d'évacuation (32) pour interdire toute communication avec l'extérieur dès que le véhicule est incliné au-delà d'une limite prévue , dans lequel le clapet (5) associé à la tubulure (4) de mise à l'air libre est situé au débouché de la tubulure (4) de mise à l'air libre dans la tubulure de remplissage (1) en comprenant un organe de fermeture (6,7,23) de la tubulure (4) de mise à l'air libre, caractérisé en ce que la tubulure de ventilation (27) débouche dans le clapet de sécurité (28), en ce que le clapet de sécurité (28) comporte un flotteur (29) apte à être entraîné par une arrivée de carburant pour commander le moyen d'obturation (31) de la tubulure d'évacuation (32) et interdire toute circulation de carburant vers l'extérieur, en ce que ledit organe de fermeture (6,17,23) de la tubulure (4) de mise à l'air libre est disposé à l'extérieur de la tubulure de remplissage (1), et en ce que, lorsque le moyen d'obturation (3) de la tubulure de remplissage (1) ferme celle-ci, le circuit pour la mise à l'air libre comporte, en série, la tubulure (4) de mise à l'air libre, le clapet (5) associé à la tubulure de mise à l'air libre (4), une portion de la tubulure de remplissage (1), une portion de la tubulure de ventilation (27) reliée directement au clapet de sécurité (28) débouchant vers la tubulure d'évacuation (32).

2. Circuit selon la revendication 1, caractérisé en ce que ledit organe de fermeture (6,17) est un pointeau fixé à une première extrémité d'un levier (7,26) pivotant autour d'un axe (8,18), la seconde extrémité dudit levier (7,26) étant apte à être commandée directement ou indirectement par des moyens de rampe (11) du moyen d'obturation (3) de la tubulure de remplissage (1).

3. Circuit selon la revendication 2, caractérisé en ce que ladite seconde extrémité du levier (7,26) porte un appendice (10) à l'intérieur de la tubulure de remplissage (1) coopérant avec les moyens de rampe (11) du moyen d'obturation (3) de la tubulure de remplissage (1).

4. Circuit selon la revendication 2, caractérisé en ce que ladite seconde extrémité du levier (7,26) est à l'extérieur de la tubulure de remplissage (1) et est commandée par les moyens de rampe (11) du moyen d'obturation (3) de la tubulure de remplissage (1) par l'intermédiaire d'un élément tel qu'un piston (12) ou une came (21).

5. Circuit selon la revendication 1, caractérisé en ce que l'organe de fermeture (23) de la tubulure (4) de la mise à l'air libre est un coulisseau sensiblement orthogonal à la tubulure de remplissage (1) rappelé par un ressort (14) en position de compression d'un joint d'étanchéité (15) pour fermer la tubulure (4) de mise à l'air libre, le coulisseau (23) comportant une extrémité biseauté (13) en saillie à l'intérieur de la tubulure (1) et qui coopère avec les moyens de rampe (11) du moyen d'obturation (3).

## Patentansprüche

1. Kreislauf für die Entlüftung eines Kraftfahrzeugtanks, enthaltend einen Einfüllstutzen (1) des Tanks mit einer Befestigungsfläche (2), die durch ein Verschlußmittel (3) des Einfüllstutzens (1) verschlossen werden kann, einen Belüftungsstutzen (27) des Tanks, der mit dem Einfüllstutzen (1) verbunden ist, einen Entlüftungsstutzen (4) des Tanks, der mit dem Einfüllstutzen (1) über eine Klappe (5) verbunden ist, welche durch das Verschlußmittel (3) des Einfüllstutzens (1) gesteuert werden kann, um die Entlüftung des Tanks vorzunehmen, wenn das Verschlußmittel (3) an der Befestigungsfläche (2) angebracht ist, und um diese Entlüftung zu verhindern, wenn das Verschlußmittel (3) ausgebaut ist, eine Sicherheitsklappe (28), die zu einem Entleerungsstutzen (32) führt, insbesondere um die Ableitung der Gase nach außen herbeizuführen, wobei diese Sicherheitsklappe (28) ein Verschlußmittel (31) umfaßt, das den Entleerungsstutzen (32) verschließen kann, um jede Verbindung mit dem Außenbereich zu verhindern, sobald das Fahrzeug über eine vorgesehene Grenze hinaus geneigt ist, wobei die mit dem Entlüftungsstutzen (4) verbundene Klappe (5) an der Ausmündung des Entlüftungsstutzens (4) im Einfüllstutzen (1) sitzt und ein Verschlußorgan (6, 7, 23) für den Entlüftungsstutzen (4) enthält, dadurch gekennzeichnet, daß der Belüftungsstutzen (27) in die Sicherheitsklappe (28) einmündet, daß die Sicherheitsklappe (28) einen Schwimmer (29) umfaßt, der durch einen Zustrom von Kraftstoff mitgenommen werden kann, um das Verschlußmittel (31) des Entleerungsstutzens (32) zu betätigen und jede Ableitung von Kraftstoff nach außen zu verhindern, daß das Verschlußorgan (6, 17, 23) des Entlüftungsstutzens (4) außen an dem Einfüllstutzen (1) angeordnet ist und daß der Kreislauffürdie Entlüftung, wenn das Verschlußmittel (3) des Einfüllstutzens (1) diesen verschließt, in Reihe geschaltet den Entlüftungsstutzen (4), die mit dem Entlüftungsstutzen (4) verbundene Klappe (5), einen Teil des Einfüllstutzens (1) und einen Teil des Belüftungsstutzens (27) enthält, der direkt mit der Sicherheitsklappe (28) verbunden ist, die in den Entleerungsstutzen (32) einmündet.

2. Kreislauf nach Anspruch 1 , dadurch gekennzeichnet, daß das genannte Verschlußorgan (6, 17) eine Nadel ist, die an einem ersten Ende eines Hebels (7, 26) befestigt ist, welcher um eine Achse (8,18) schwenkbar ist, während das zweite Ende des genannten Hebels (7, 26) direkt oder indirekt über Rampenmittel (11) des Verschlußmittels (3) des Einfüllstutzens (1) betätigtwerden kann.

3. Kreislauf nach Anspruch 2 , dadurch gekennzeichnet, daß das genannte zweite Ende des Hebels (7, 26) im Innern des Einfüllstutzens (1) einen Ansatz (10) trägt, der mit den Rampenmitteln (11) des Verschlußmittels (3) des Einfüllstutzens (1) zusammenwirkt.

4. Kreislauf nach Anspruch 2 , dadurch gekennzeichnet, daß sich das genannte zweite Ende des Hebels (7, 26) außerhalb des Einfüllstutzens (1) befindet und durch die Rampenmittel (11) des Verschlußmittels (3) des Einfüllstutzens (1) über ein Element wie etwa einen Kolben (12) oder einen Nocken (21) betätigt wird.

5. Kreislauf nach Anspruch 1 , dadurch gekennzeichnet, daß das Verschlußorgan (23) des Entlüftungsstutzens (4) ein in etwa orthogonal zum Einfüllstutzen (1) verlaufender Schieber ist, der durch eine Feder (14) in Druckposition einer Dichtung (15) zurückgeholt wird, um den Entlüftungsstutzen (4) zu schließen, wobei der Schieber (23) ein abgeschrägtes Ende (13) aufweist, welches in das Innere des Stutzens (1) vorspringt und mit den Rampenmitteln (11) des Verschlußmittels (3) zusammenwirkt.

## Claims

1. A fresh air supply circuit for a motor vehicle fuel tank, of the type comprising a filling pipe (1) for the fuel tank with a base (2) adapted to be closed by an obturating means (3) for the filling pipe (1), a vent pipe (27) for the fuel tank connected to the filling pipe (1), a pipe (4) for delivery of fresh air to the fuel tank, connected to the filling pipe (1) through a valve (5) adapted to be controlled by the obturating means (3) of the filling pipe (1), in such a way as to ensure the supply of fresh air to the fuel tank when the said obturating means (3) is mounted on the base (2), and to prevent the said supply of fresh air when the said obturating means (3) is removed, a safety valve (28) being open to an evacuation pipe (32) for, in particular, ensuring the escape of gases, the said safety valve (28) including an obturating means (31) which is adapted to obturate the evacuation pipe (32) so as to prevent any communication with the outside once the vehicle is inclined beyond a predetermined limit, wherein the valve (5) associated with the fresh air delivery pipe (4) is situated at the outlet of the fresh air delivery pipe (4) into the filling pipe (1), and comprises a closing member (6, 7, 23) for the fresh air delivery pipe (4), characterised in that the vent pipe (27) opens into the safety valve (28), in that the safety valve (28) includes a float (29) which is adapted to be driven by an input of fuel so as to control the obturating means (31) of the evacuation pipe (32) and to prevent any outward flow of fuel, in that the said closing member (6, 17, 23) of the fresh air delivery pipe (4) is disposed on the outside of the filling pipe (1), and in that, when the obturating means (3) of the filling pipe (1) closes the latter, the circuit for supply of fresh air comprises, in series, the fresh air delivery pipe (4), the valve (5) associated with the fresh air delivery pipe (4), part of the filling pipe (1), and a part of the vent pipe (27) connected directly to the safety valve (28) and open to the evacuation pipe (32).

2. A circuit according to Claim 1, characterised in that the said closing member (6, 17) is a pointed element secured to a first end of a lever (7, 26) pivoting about an axis (8, 18), with the second end of the said lever (7, 26) being adapted to be controlled directly or indirectly by ramp means (11) of the obturating means (3) of the fitting pipe (1).

3. A circuit according to Claim 2, characterised in that the said second end of the lever (7, 26) carries an appendix (10) within the tube (1), cooperating with the ramp means (11) of the obturating means of the filling pipe (1).

4. A circuit according to Claim 2, characterised in that the said second end of the lever (7, 26) is outside the pipe (1), and is controlled by the ramp means (11) of the obturating means (3) of the filling pipe (1) through an element such as a piston (12) or a cam (21

5. A circuit according to Claim 1, characterised in that the closing member (23) for the fresh air delivery pipe (4) is a sliding element which is substantially orthogonal to the filling pipe (1), and which is biassed by a spring (14) into a position for compressing a sealing ring (15) so as to close the fresh air delivery pipe (4), with the sliding element including a chamfered end portion (13) which projects into the interior of the pipe (1) and which cooperates with the ramp means (11) of the obturating means (3).
